(19) **Europäisches Patentamt / European Patent Office / Office européen des brevets**

(11) **EP 3 185 164 A2**

(12) **EUROPEAN PATENT APPLICATION**
published in accordance with Art. 153(4) EPC

(43) Date of publication:
28.06.2017 Bulletin 2017/26

(51) Int Cl.:
*G06F 21/56* (2013.01)

(21) Application number: 15833965.5

(22) Date of filing: 18.08.2015

(86) International application number:
PCT/KR2015/008625

(87) International publication number:
WO 2016/028067 (25.02.2016 Gazette 2016/08)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 18.08.2014 KR 20140107285

(71) Applicant: Secugraph Inc.
Seoul 06084 (KR)

(72) Inventors:
• SEO, Il Ju
  Seoul 08279 (KR)
• HAN, Seung Chul
  Gwacheon-si
  Gyeonggi-do 13821 (KR)

(74) Representative: Awapatent AB
Junkersgatan 1
582 35 Linköping (SE)

(54) **SYSTEM AND METHOD FOR DETECTING MALICIOUS CODE USING VISUALIZATION**

(57) Disclosed are a system and a method for detecting a malicious code using visualization in order to allow a user to intuitively detect behavior of client terminals infected with a malicious code. The system for detecting a malicious code using visualization includes a data collection module which collects DNS packets, a parameter extraction module which extracts parameters for visualization from the collected DNS packets, a data loading module which loads the extracted parameters; a blacklist management module which manages blacklist domain, a filter module which filters unnecessary data from the loaded data, and a visualization generation module which generates visualization patterns using the extracted parameters.

Fig. 5

EP 3 185 164 A2

**Description**

[TECHNICAL FIELD]

The present invention relates a system and a method for detecting a malicious code using visualization.

[BACKGROUND ART]

A botnet is a combination of the words malicious code-infected terminal (bot) and network, and is a network of terminals infected with a malicious code to be remotely controlled by an attacker.

The botnet, which is a major threat on the Internet, is used in various cybercrimes such as personal information hijacking, distributed denial of service (hereinafter, referred to as "DDoS") attacks, spamming mail sending, pharming, phishing, and the like, thereby threatening national security as well as economic loss.

Although there are known various kinds of botnets until now, a common feature of the botnets is that a botnet is controlled by a command and control (C&C) server.

In an initial botnet, an Internet protocol address (hereinafter, referred to as an "IP address") or a domain name is programmed into a character string in a malicious code to communicate with a C&C server. However, in this case, the C&C server may be easily detected and blocked through the static analysis of a conventional security technology.

To circumvent such detection, a recent botnet uses an avoidance technique called domain flux, such as a domain generation algorithm (hereinafter, referred to as "DGA"), a dynamic domain name system (DDNS), and the like. Since the domain name of the C&C server 110 generated by the DGA is maintained only for a short time period, it is difficult for the security system to detect the domain name of the C&C server 110. Due to numerous variants of malicious codes and various avoidance techniques, it is difficult for the existing security systems to detect various malicious codes. Differently from such an initial botnet, since the malicious code communicates with a plurality of C&C servers, a single point of failure does not exist so that it is difficult to block the malicious code.

To solve such problems, there have been proposed many detection techniques. There are a client-based botnet detection technique and a network-based botnet detection technique as techniques for detecting a botnet.

Client-based botnet detection technology may be broadly divided into signature-based detection technology and abnormal behavior-based detection technology. The signature-based detection technology that uses a malicious code analysis cannot detect a new bot, and can be easily circumvented by using execution compression technology. Although the abnormal behavior-based detection technology has a technique of detecting a malicious code using an abnormal behavior such as a system call, there is a disadvantage that a false detection rate is high. Since the network-based botnet detection technology detects a malicious code by analyzing network traffic, it is difficult to process a large amount of traffic, and it is impossible to monitor packets when encryption communication is performed.

It is urgent to provide a scheme of coping with the rapidly increasing cybercrime. In addition, there is a need to develop a botnet detection technology that is difficult to be disabled only through a simple avoidance design.

[DETAILED DESCRIPTION OF THE INVENTION]

[TECHNICAL PROBLEM]

An object of the present invention is to provide a visualized pattern to allow a user to intuitively detect a malicious operation.

[TECHNICAL SOLUTION]

To achieve the above-described object, according to an embodiment of the present invention, there is provided a system for detecting a malicious code using visualization, which includes collecting a DNS packet, extracting parameters for visualization from the collected DNS packet, loading data, filtering, managing a blacklist, and generating a visualization pattern of the extracted parameter and the filtered data.

In this case, the parameters include at least two of an IP address of a client sending a DNS query, a query type, the domain name, a timestamp, and a flag.

According to another embodiment of the present invention, there are provided a system and a method for detecting a malicious code using visualization, which includes generating a visualization pattern using DNS packets, and outputting the generated visualization pattern. In this case, the pattern represents a destination domain name, an IP address of a client requesting a DNS query, and a quantity of the DNS query.

According to still another embodiment of the present invention, there is provided a method for detecting a malicious code using visualization, which includes extracting data corresponding to IP addresses and DNS queries of clients from DNS response packets; and generating a visualization pattern displayed in a cylindrical coordinate system based on the extracted data.

According to still another embodiment of the present invention, there is provided a method for detecting a malicious code using visualization, which includes generating a visualization pattern for detecting a malicious code by using DNS packets. In this case, IP addresses of devices inquiring a domain name are displayed on the visualization pattern based on the domain name.

[ADVANTAGEOUS EFFECTS OF THE INVENTION]

According to the method of detecting a malicious code using visualization of the present invention, a pattern of visualizing a botnet behavior by using a DNS response is generated, so that a user may intuitionally detect a malicious behavior through the pattern.

[DESCRIPTION OF THE DRAWINGS]

FIG. 1 is a view illustrating a structure of botnet.
FIG. 2 is a view illustrating a system for detecting a malicious code according to an embodiment of the present invention.
FIG. 3 is a block diagram illustrating a system and a method for detecting a malicious code according to an embodiment of the present invention.
FIG. 4 is a view illustrating a visualization component for a visualization pattern according to an embodiment of the present invention.
FIG. 5 is a view illustrating a pattern according to an embodiment of the present invention.
FIG. 6 is a view illustrating various visualization patterns.

[BEST MODE]

Hereinafter, embodiments of the present invention will be described in detail with reference to the accompanying drawings such that those skilled in the art can easily carry out the present invention. However, the present invention may be embodied in many different forms and is not limited to the embodiments set forth herein.

The present invention relates to a system and a method for detecting a malicious code using visualization and provides a visualization pattern through which a user may intuitionally detect a botnet behavior.

A botnet will be briefly described prior to a detailed description of the system and method for detecting a malicious code.

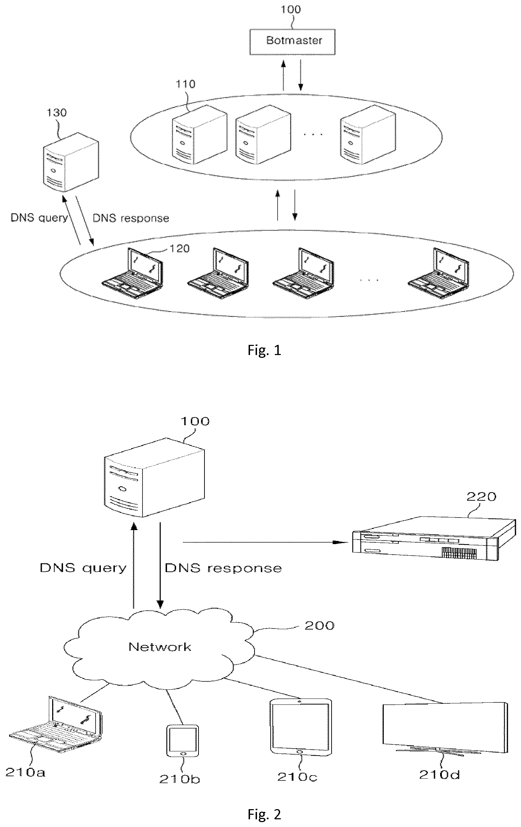

FIG. 1 is a view illustrating a structure of botnet.

Referring to FIG. 1, a botnet is a network of bots, which are terminals (hereinafter, referred to as "bots") infected with a malicious code, remotely controlled through a command and control (hereinafter, referred to as "C&C") server 110 by a botmaster 100 having authority to command/control the bots.

Although the botnet uses only one C&C server 110, in recent years, to prevent the behavior from being detected, a plurality of C&C servers 110 may be used or a domain name of the C&C servers 110 may be changed.

To receive a command from the botmaster 100, a bot 120 sends a domain name system (hereinafter, referred to as "DNS") query to a DNS server 130 in a process of accessing to the C&C server 110. In detail, the bot executes a downloaded malicious code and inquires an IP address of the C&C server 110 of the DNS server 130.

The bot 120 is joined by accessing to the C&C server 110 by using the IP address received from the DNS server 130 as a response. The botmaster 100 controls and commands numerous bots 120 through the C&C server 110. The bots that have received the command perform attacks such as DDoS, spam mail transmission, personal information leakages, and the like.

A recent botnet avoids a malicious code detection system using a plurality of domain names to access to the C&C servers 110, which are distributed in several places. Even if it is failed to access to some C&C servers 110 or some C&C servers 110 are blocked, this is to prevent the entire botnet from being blocked by accessing to another C&C server 110.

FIG. 2 is a view illustrating a system for detecting a malicious code using visualization according to an embodiment of the present invention.

A system 220 for detecting a malicious code according to an embodiment of the present invention is operated in an environment that the DNS server 130 and a plurality of client terminals 210a, 210b, 210c and 210d are connected to a network 200.

The client terminals 210a, 210b, 210c and 210d include all kinds of terminals inquiring to the DNS server 130 through the network 200. For example, the client terminal 210 includes all kinds of terminals, such as a desktop computer, a laptop computer, a smartphone, a tablet PC, a smart TV, a smart vehicle, smart home appliances, and the like, accessible to the network 200.

The network 200 includes a wire network such as a wide area network (WAN), a metropolitan area network, a local area network (LAN), Intranet, and the like, and a wireless network such as a mobile radio communication network, a satellite network, and the like.

The DNS server 130 performs a function of converting a domain name to a network address or vice versa. According to an embodiment of the present invention, when the client terminal 210 sends a query about a domain to the DNS server 130 to access to a target server for the purpose of receiving a service, the DNS server 130 provides an IP address to the client terminal 210 as a response to the query. In a case of bots 120 infected with the same malicious code, since the bots 120 act collectively in a similar query pattern, there is a difference between the bots 120 and uninfected client terminals.

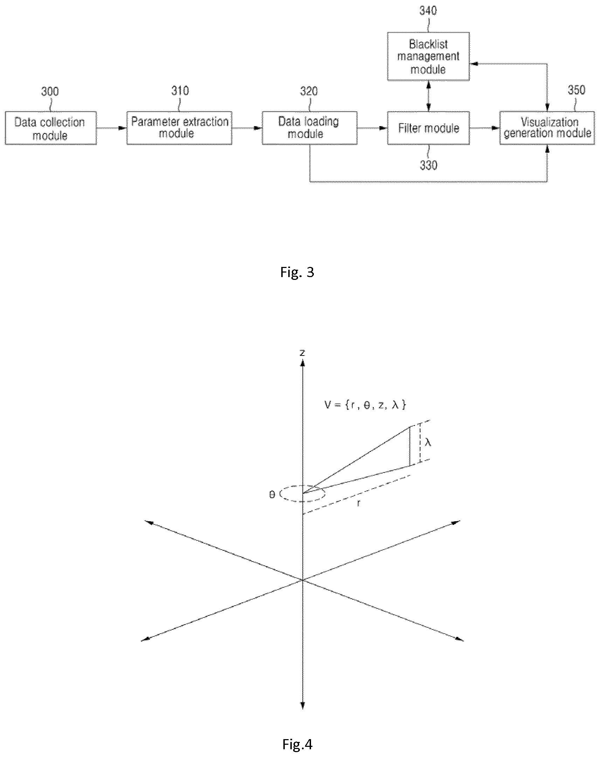

FIG. 3 is a block diagram illustrating a method for detecting a malicious code according to an embodiment of the present invention.

Referring to FIG. 3, the system 220 for detecting a malicious code according to an embodiment of the present invention includes a data collection module 300, a parameter extraction module 310, a data loading module 320, a filter module 330, a blacklist management module 340, and a visualization generation module 350.

The data collection module 300 collects a DNS response packet on the network 200. For example, the data collection module 300 may collect a DNS response packet by mirroring traffic through tapping or may directly collect a DNS response packet through software installed to the client terminal. Of course, the system 220 for detecting a malicious code may collect a DNS query.

The reason that the system of the present invention analyzes DNS traffic is because the load is less than that when analyzing the entire network traffic and DNS traffic occurs before malicious behaviors of the bots 120. Specifically, the DNS response packet includes query data as well as DNS response data.

The parameter extraction module 310 extracts visualization parameters by parsing the DNS response packet.

The parameter may include an IP address of the client terminal 210, a domain name, a DNS query type, a timestamp, and a flag.

According to an embodiment, the parameter extraction module 310 may calculate cardinality for each domain name based on the IP address and the domain name of the DNS response.

In addition, the parameter extraction module 310 may calculate intensity based on the timestamp and the IP address.

In addition, the parameter extraction module 310 may calculate a flag error rate based on the IP address and the flag.

The IP address of the client terminal 210 may be a 32-bit value or 64-bit value in an IP header section.

In the DNS response, the query type, which is a 16-bit value having no signs for a query type field in the DNS query section, may be used to identify a behavior type.

In the DNS response, the domain name is a domain name of which the client terminal 210 intends to obtain the IP address. The domain name may be a variable-length string in a DNS query section or a response section and may be used to identify an attack target of the C&C server 110 and the bots (120).

In the DNS response, the timestamp may be a 32-bit value of a response time which the DNS server 130 records. The timestamp may be used to measure a quantity of DNS queries generated by the client terminal 210. However, since a large amount of resources is required to update the timestamp every second, the present invention may use a predetermined time $\Delta t_i(c)$ and a time variation $\Delta t_i(c)$ of the initial time $t_0(c)$ the client $C$.

That is, $\Delta t_i(c) := t_i(c) - t_0(c)$. In the DNS response, the flag, which is a 16-bit value in the DNS header section, includes fields including state information. Specifically, the lower four bits of the flag which represents a replay code (hereinafter, referred to as "RCODE") and indicates whether the query was successfully answered are used. According to the present invention, the flag may be used to measure the error rate to detect a botnet or a DNS cache poisoning attack in which an attacker inserts falsified information into a cache of the DNS server 130.

Next, as described above, after extracting five parameters, the system of the present invention may calculate three parameters of a cardinality, an intensity and a flag error rate.

The cardinality represents the number of clients inquiring a specific domain name. The cardinality may be calculated for each domain name based on the IP address and the domain name of the client of the DNS response. Normal clients do not maintain constant cardinalities, but the botnet maintains a relatively constant cardinality over time. Thus, the system may visually group botnets through the cardinalities.

For a group $C = \{c_1, c_2, ..., c_n\}$ of a client $c$ inquiring a domain name $d$, the cardinality $|\mathscr{C}(d)|$ of the domain $d$ may be defined as following Equation 1.

**【Equation 1】**

$$|\mathscr{C}(d)| \doteq n$$

In the present invention, the intensity represents the number of queries per second of a client. A malicious behavior such as a spam transmission, a DNS cache poisoning attack, a distributed reflection DoS (hereinafter, referred to as "DRDoS") attack, and the like generates many DNS packets for a short time. The system may measure the intensity to identify a client which is shown as a client performing a malicious behavior in consideration of the characteristics of a malicious behavior.

According to an embodiment, the intensity may be calculated based on the timestamp and the IP address of a client.

According to the present invention, the flag error rate may be used to detect an attack or a malicious behavior. For example, when an attacker makes a DNS cache poisoning attack, many error flags are generated. Thus, the system may detect an attack or a malicious behavior through the error flags. The flag error rate is defined as following Equation 2.

**【Equation 2】**

$$F(c) := \frac{|\varepsilon(c)|}{|\forall\varrho(c)|}$$

Wherein $|\forall\varrho(c)|$ represents the total number of queries of client c, and $|\varepsilon(c)|$ represents the number of flag errors in a response to a query of client $c$.

According to an embodiment, the flag error rate may be calculated based on the IP address of the client and the flag.

The data loading module 320 may group all the IP addresses for each domain name and store the data extracted by the parameter extraction module 310.

According to an embodiment, the data loading module 320 includes a data structure (hereinafter, referred to as a "domain table") for loading a domain name and a data structure (hereinafter, referred to as "IP table") for loading an IP of a client inquiring the corresponding domain.

The domain table may be a data structure $H_D\langle d,H_C\rangle$ having a domain name $d$ as a key and the IP table $H_C$ as a value.

The IP table $H_C$ may be a data structure $H_C\langle c,c_\psi\rangle$ having an IP address c of a client as a key, and a structure $c_\psi$ including an array $\vec{q}$ for storing a query type, an array $\vec{\Delta t}$ for storing an amount of variation in time, an array $\vec{\Delta t}$ of storing a timestamp, and an array $\vec{f}$ for storing a flag.

The data structures of the domain table and the IP table of the data loading module 320 may be implemented with all kinds of detection algorithms such as an array, a hash table, a hash map, a binary search tree, B-tree, an AVL tree, and the like.

The data loading module 320 searches for whether a domain name $d_i$ exists in the domain table $H_D$, and if the domain name $d_i$ exists in the domain table $H_D$, searches for whether a client IP $c_i$ exists in the corresponding IP table $H_C$.

If the client IP $c_i$ exists in the corresponding IP table $H_C$, $(q_i, \Delta t_i, f_i)$ is added to the arrays $c_\psi.\vec{q}$, $c_\psi.\vec{\Delta t}$ and $c_\psi.\vec{f}$ in the structure $c_\psi'$. If the client IP $c_i$ does not exist in the corresponding IP table $H_C$, after a new structure $c_\psi'$ is created, $(q_i, \Delta t_i, f_i)$ is inserted into the arrays $c_\psi'.\vec{q}$, $c_\psi'.\vec{\Delta t}$ and $c_\psi'.\vec{f}$ of the new structure $c_\psi'$, respectively. Then, the client IP $c_i$ is inserted as a key and the new structure $c_\psi'$ is inserted into the IP table $H_C$ having the new structure $c_\psi'$ as a value.

If the domain name $d_i$ does not exist in $H_D$, after a new structure $c_\psi'$ is generated, $(q_i, \Delta t_i, f_i)$ is inserted into the arrays $c_\psi'.\vec{q}$, $c_\psi'.\vec{\Delta t}$ and $c_\psi'.\vec{f}$ in the new structure $c_\psi'$, respectively. Then, the IP $c_i$ is inserted as a key and the new structure $c_\psi'$ is inserted into the IP table $H_C$. Then, the domain name $d_i$ is inserted into the domain table $H_D$ as the key and the IP table $H_C$ is inserted as a value.

The data loading module 320 may delete the stored data after a preset threshold time has elapsed.

According to an embodiment, the data loading module 320 may load only once without redundantly loading a single domain of the domain table. The data loading module 320 may load the IP address of a client only once without redundantly loading it in a single domain, and may store a query type, a timestamp and a flag according to a single IP address.

The filter module 330 filters the data loaded by the data loading module 320 to remove data on a normal behavior from the data. In detail, the filter module 330 filters and groups the domain names according to the cardinalities $|\mathscr{C}(d)|$ of the domain names $d$.

The filter module 330 receives the domain table $H_D$ of the data loading module 320 as an input, and generates a data structure $T$ having the cardinality $|\mathscr{C}(d)|$ for a domain $d$ as a key and an offset array $\vec{o}$ as a value.

While the filter module 330 is traversing the domain table $H_D$, the filter module 330 compares the total number $|\forall \varrho_c|$ of queries of a client with the threshold value $\mathcal{T}_{\mathscr{Q}}$ to determine whether the total number $|\forall \varrho_c|$ of queries of a client is greater than the threshold value $\mathcal{T}_{\mathscr{Q}}$ and searches for whether the domain name $d$ exists in the blacklist $B$.

If the total number $|\forall \varrho_c|$ of queries of a client is less than the threshold value $\mathcal{T}_{\mathscr{Q}}$ or the domain name $d$ does not exist in the blacklist B, the filter module 330 continues to traverse the domain table $H_D$. If not, the filter module 330 searches for whether the cardinality $|\mathscr{C}(d)|$ for the domain name $d$ exists in the data structure $T$.

If the cardinality $|\mathscr{C}(d)|$ for the domain name $d$ exists in the data structure $T$, the filter module 330 inserts the offset of $H_D[d]$ into the corresponding array $o$.

If there is no cardinality for the domain $d$ in the data structure $T$, a new array $\vec{o}$ is generated, and the filter module 330 inserts the offset of $H_D[d]$ into the new array $\vec{o}$, inserts $|\mathscr{C}(d)|$ as the key and $\vec{o}$ as a value into the data structure $T$.

In particular, since the DNS query distribution follows Zipfs law in this conditional state, many meaningless data may be filtered.

The blacklist management module 340 performs a function of storing a known blacklist domain.

The visualization generation module 350 outputs sets $v$ of triangle vertices in a cylindrical coordinate system.

As illustrated in FIG. 4, the visualization generation module of the present invention may display behaviors of clients in a triangle form.

Specifically, the coordinates of a general cylindrical coordinate system uses a radius $r$ and angles $\theta$ and $z$ formed in the x-y plane to display a point in a three-dimensional space, but in the present invention, the cylindrical coordinate system uses the height $r$, angle $\theta$ and $z$, and base $\lambda$ of a triangle to display the triangle in the three-dimensional space.

While traversing the data structure $T$ of the filter module 330, the visualization generation module 350 obtains the cardinality $|\mathscr{C}(d)|$ of the domain name $d$ and traverses the offset array $\vec{o}'$ which is the data structure $T$. After the offset for the domain name $d$ in the offset array $\vec{o}'$ is obtained, the IP addresses of the clients inquiring the domain name $d$ are obtained from the domain table $H_D$.

In order to calculate the angle of the triangle in the cylindrical coordinate system of the present invention, when each octet of the IP address $c_i$ of the client is displayed with $IP_1$, $IP_2$, $IP_3$ and $IP_4$, the IP address $c_i$ of the client may be expressed as following Equation 3.

【Equation 3】

$$\underbrace{IP_1(c_i) \cdot 2^{24}}_{1^{st} octet} + \underbrace{IP_2(c_i) \cdot 2^{16}}_{2^{nd} octet} + \underbrace{IP_3(c_i) \cdot 2^8}_{3^{rd} octet} + \underbrace{IP_4(c_i)}_{4^{th} octet}$$

From Equation 3, the IP address $c_i$ of the client may be calculated as following Equation 4 expressed with angle $\theta$ in the cylindrical coordinate system.

【Equation 4】

$$\theta(c_i) := \left( \sum_{k=1}^{4} IP_k(c_i) \frac{360}{2^{8(4-k)}} \right) \frac{\pi}{180}$$

Thus, the IP address $c_i$ of each client may be mapped with the angle $\theta$.

In the cylindrical coordinate system of the present invention, the height $r$ of the triangle is determined by the

cardinality $|\mathscr{C}(d_m)|$ of the domain name $d_m$ and calculated as following Equation 5.

【Equation 5】

$$ r(c_i) := \ln[|\mathscr{C}(d_m)|] + \tau_{\mathscr{N}} $$

Wherein the threshold value ($\tau_{\mathscr{N}}$) may be determined according a network scale or a display resolution.

In the cylindrical coordinate system of the present invention, the position axis $z$ of the triangle may be determined according to the cardinality $|\mathscr{C}(d_m)|$ of the domain name $d_m$, and may be arranged in ascending or descending order on the $z$ axis.

Alternatively, when a user selects a specific triangle, a value of $z$ is not determined according to the cardinality $|\mathscr{C}(d_m)|$ of the domain name $d_m$, but may be designated as a user desired position in the cylindrical coordinate system.

When it is assumed that $|\mathscr{C}(d_m)|$ returns in the data structure when each $|\mathscr{C}(d_m)|$ is stored in the data structure, the value of $z$ is expressed as following Equation 6.

【Equation 6】

$$ z(c_i) := rank(|\mathscr{C}(d_m)|) $$

The coordinate value range of the vertex set V including the elements of each triangle may be defined as following Equation 7.

In the cylindrical coordinate system of the present invention, the base λ of the triangle may be determined according to the average number of queries per second of the client having IP address $c_i$.

【Equation 7】

$$ V = \begin{cases} 0 < r \le |\mathscr{C}(d)| \\ 0 < \theta \le 2\pi \\ 0 < z < |D| \\ 0 < \lambda < \tau_{\mathscr{I}} \end{cases} $$

According to the present invention, in order to determine the color of the triangle in the cylindrical coordinate system, three octets may be selected from the client IP and displayed with values in the range of 0 to 255 in red, green and blue.

In addition, the system may assign different colors to triangles according to a situation even if the triangle is the same. For example, as will be described below, the color of the triangle when the intensity of the IP address of the client exceeds a preset threshold value or the flag error rate of the IP address exceeds a threshold value may be different from that of the triangle when the intensity of the IP address of the client is equal to or less than the preset threshold value, or the flag error rate of the IP address is equal to or less than the preset threshold value or exceeds the blacklist domain or the threshold value.

According to an embodiment, the system may represent the color of the triangle corresponding to the indication of an attack differently from the colors of other wings. Thus, the user may intuitively detect that an attack is applied to the destination, through the pattern.

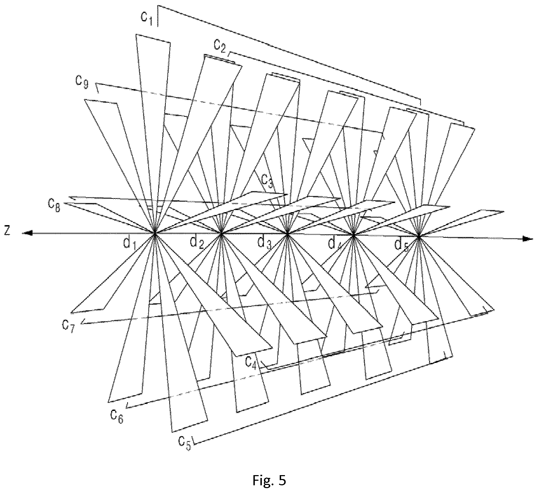

As illustrated in FIG. 5, a system and a method for detecting a malicious code using visualization may visually display DNS data in a cylindrical coordinate system. For example, the system may collect DNS responses, extract DNS queries included in the collected DNS responses, and generate a visual pattern based on the extracted DNS queries.

'$d$' on the $z$ axis may represent the domain name, such as Naver, Daum, and the like, of the attack destination or the domain name of the C&C server 110. '$c$' may represent the client transmitting a packet, for example, the bot 120. The length of the base of the triangle may be the intensity of the DNS query of a bot.

Thus, the user may know, through the visually displayed pattern, which bot 120 communicates with which C&C server 110 or where the attack destination is.

Hereinafter, a process of generating such a pattern in the cylindrical coordinate system will be described. Subsequently, the system uses the above-described three features, and generates a visualization pattern according to following three principles.

First, as illustrated in FIG. 4, the system may display the IP address of each client in the cylinder coordinate system, may display the domain name on the z-axis according to the cardinality queried by the client, and vice versa. The reason that the triangle is displayed in three-dimensional space is because client IP addresses are displayed with dots or lines on a linear axis or plane, so that large numbers of IP addresses overlap or intersect with each other, so it is difficult to distinguish IP addresses from each other. In this case, the domain name may be a domain name of the destination or a domain name of the C&C server 110.

Second, the system of the present invention displays a botnet using a pattern formed by collecting triangles in a cylindrical coordinate system. As illustrated in FIG. 4, the coordinates of a triangle in a cylindrical coordinate system may be displayed with a height $r$, an angle $\theta$, a position $z$ on the $z$ axis, and a base $\lambda$ of a triangle.

Third, as illustrated in FIG. 5, the system displays the base of the triangle using additional coordinates $\lambda$ to display the intensity of the query of the client. The reason that a triangle is used to represent the intensity is because the triangle may represent more informational than a point or line and may be easier to distinguish colors or locations than points or lines. In addition, another reason is because a larger amount of processing is required when a figure having more vertices than a triangle is displayed. In addition, still another reason is because a triangle is sufficient for the user to intuitively recognize a malicious behavior.

In this case, the IP address of each client is represented by an angle $\theta$ of a triangle. As a result, the IP addresses of clients inquiring a destination having the same domain name may be displayed with a circle around the $z$. axis. In this case, the base of each triangle may represent the intensity of an amount of DNS queries of the client.

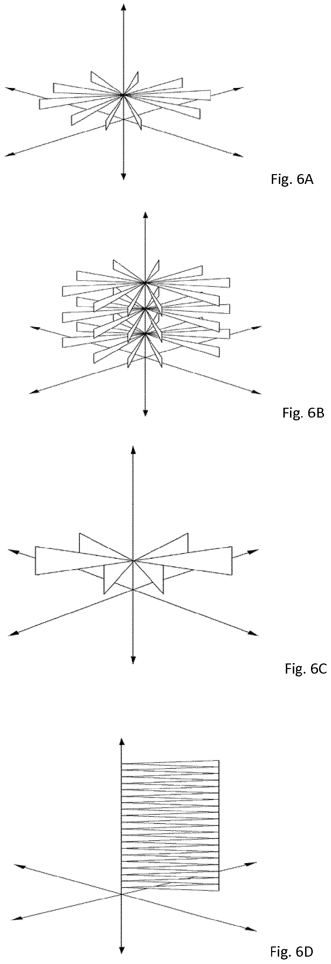

The system may define an attack pattern in four patterns as illustrated in FIGS. 6A to 6D.

Type- I (FIG. 6A): When a plurality of bots 120 performs a DNS query to find one C&C server 110, they are represented in a disk-shaped pattern. Of course, a disk-shaped pattern may appear even in a normal case, but, in this case, the cardinality is very irregular and the disk-shaped pattern has a low intensity. Thus, the disk-shaped pattern corresponding to a botnet may be clearly distinguished from the pattern corresponding to a normal case in terms of size, color and thickness.

Type- I (FIG. 6B): When a plurality of C&C servers 110 or C&C server 110 has a plurality of domain names or a domain name, in a case that a plurality of bots performs DNS queries, disk-shaped patterns of Type-I may be arrayed to be represented in a cylinder shape. In this case, the disk-shaped patterns may be the same or similar to each other.

Type-III (FIG. 6C) : When a single bot 120 or plural bots 120 send many DNS queries, a pattern may be formed in an triangle having an increased width. Such a pattern represents a DRDoS attack or an abnormal behavior.

Type-IV (FIG. 6D) : When one bot 120 inquires a plurality of domain names, a plurality of triangles may be arranged in the z-axis direction so that it is expressed as a plane. This represents a DNS cache poisoning attack or another type of abnormal behavior.

[INDUSTRIAL APPLICABILITY]

The embodiments of the present invention described above are for illustrative purposes only and do not limit the present invention. It is to be appreciated that those skilled in the art may change, modify, or add to the embodiments without departing from the scope and spirit of the invention. Such changes, modifications, and additions should be viewed as belonging to the scope of the invention as defined by the appended claims.

**Claims**

**1.** A system for detecting a malicious code using visualization, the system comprising:

> a data collection module configured to collect a DNS packet;
> a parameter extraction module configured to extract parameters for visualization;
> a data loading module configured to store data corresponding to the parameters;
> a filter module;
> a blacklist module; and
> a visualization generation module configured to generate a visualization pattern using the extracted parameters, wherein the visualization pattern displays at least one of a destination domain name, a client IP address, and a quantity of DNS queries.

**2.** The system of claim 1, wherein the DNS packet is a DNS response packet, and
wherein the parameters include an IP address of a client making a DNS query, a query type, the domain name, a timestamp, and a flag.

**3.** The system of claim 1, wherein the pattern is displayed in a cylindrical coordinate system,
wherein domain names of the destination is arrayed on a linear axis, wherein IP addresses of clients toward a specific domain name are arrayed based on the domain name expressed on a linear axis,
wherein a quantity of the DNS queries are displayed with a base of a triangle, and
wherein the domain name and the IP address correspond to an angle of the triangle in the cylindrical coordinate system.

**4.** The system of claim 1, further comprising:

a data collection module configured to collect DNS responses as the DNS packet,
wherein the parameter extraction module extracts the parameters from the collected DNS responses.

**5.** The system of claim 1, further comprising:

a parameter extraction module configured to extract the parameters;
a data loading module configured to store data corresponding to the extracted parameters;
a filter module configured to filter the stored data to exclude data corresponding to a normal behavior from the stored data
a blacklist management module configured to manage a domain name on a blacklist; and
a visualization generation module configured to generate a visualization pattern using the extracted parameters.

**6.** The system of claim 5, wherein the data loading module removes the stored data when a preset threshold time is elapsed.

**7.** The system of claim 5, wherein the parameter extraction module calculates a cardinality for each domain name based on a client IP address and a domain name of a DNS response.

**8.** The system of claim 5, wherein the parameter extraction module calculates intensity based on a timestamp and the IP address.

**9.** The system of claim 5, wherein the parameter extraction module calculates a flag error rate based on the IP address and a flag.

**10.** The system of claim 5, wherein the data loading module stores the IP address once and stores a kind of a query, a timestamp and a flag according to a single IP address.

**11.** The system of claim 5, wherein, when a number of queries about the IP address is equal to or greater than a preset threshold value or a specific domain is included in the backlist, the data loading module stores a cardinality and an IP address of a corresponding domain in a data structure.

**12.** The system of claim 1, wherein the parameter for the pattern includes the IP address, an angle calculated based on the IP address, a cardinality inquired by the client terminal, a threshold value for a quantity of queries by the client, and a rank value of the cardinality of the domain.

**13.** A system for detecting a malicious code using visualization, the system comprising
a parameter extraction module configured to extract a parameter for visualization from a DNS packet;
a data loading module configured to store data corresponding to the extracted parameters;
a filter module configured to filter the stored data to exclude data corresponding to a normal behavior from the stored data;
a blacklist management module configured to manage a domain name on a blacklist; and
a visualization generation module configured to generate a visualization pattern using the extracted parameters,
wherein the parameters include at least two of an IP address of a client terminal sending a DNS query, a query type, the domain name, a timestamp, and a flag.

**14.** The system of claim 13, wherein the pattern is displayed in a cylindrical coordinate system, wherein domain names of the destination is arrayed on a linear axis while being spaced apart from each other, wherein IP addresses of clients having a specific domain name as a destination are arrayed in a form in which triangles are arrayed in a circular form based on a linear axis, wherein a quantity of the DNS queries are displayed with a base of a triangle, and wherein the domain name and the IP address correspond to vertices of the triangle.

**15.** The system of claim 13, wherein the domain names are sequentially arrayed on a linear axis in order of quantity of the DNS queries.

**16.** A method of detecting and visualizing a malicious code, the method comprising:

generating a visualization pattern using DNS packets; and
outputting the generated visualization pattern,
wherein the pattern represents a destination domain name, an IP address of a client requesting a DNS query, and a quantity of the DNS query.

**17.** The method of claim 16, wherein the pattern is displayed in a cylindrical coordinate system, wherein domain names of the destination is arrayed on a linear axis, wherein IP addresses of clients inquiring a specific domain name are arrayed on a circle having the domain name as a center of the circle, and wherein a quantity of the DNS queries is displayed with an area of a triangle.

**18.** The method of claim 17, wherein a color of the triangle when an intensity of the IP address exceeds a preset threshold value or a flag error rate of the IP address exceeds a preset threshold value is different from a color of the triangle when the intensity of the IP address is equal to or less than the preset threshold value or the flag error rate of the IP address is equal to or less than the preset threshold value.

**19.** A method of visualizing a malicious code, the method comprising:

extracting client IP addresses and data corresponding to DNS queries from DNS responses; and
generating a visualization pattern displayed in a cylindrical coordinate system based on the extracted data.

**20.** The method of claim 19, wherein, in the pattern, domain names of a destination is arrayed on a linear axis, wherein IP addresses of client inquiring a specific domain name are arrayed in a circular shape of triangles about the linear axis, and wherein a quantity of the DNS queries is displayed with a base of a triangle.

**21.** A method of visualizing a malicious code, the method comprising:

generating a visualization pattern for detecting a malicious code by using DNS packets,
wherein IP addresses of devices inquiring a domain name are displayed on the visualization pattern based on the domain name.

**22.** The method of claim 21, wherein the domain name is arrayed at a center of a virtual circle, wherein the IP addresses are arrayed on the circle, a quantity of the DNS packets is displayed with a base of a triangle, and wherein the domain name is arrayed on one of vertices of the triangle.

**23.** The method of claim 21, wherein the devices are terminals infected with a malicious code and are connected to a plurality of C&C servers.

**24.** The method of claim 21, wherein the pattern is generated by using the parameters extracted from the DNS packets, wherein the DNS packet is a DNS response packet, and wherein the parameter includes an IP address of a client sending a DNS query, a query type, the domain name, a timestamp, and a flag.

**25.** The method of claim 21, wherein a quantity of the DNS packets is displayed with a base of a triangle, and wherein a color of a triangle when the quantity of the DNS packets exceeds a preset threshold value is different from a color of a triangle when the quantity of the DNS packets is equal to or less than the preset threshold value.

26. The method of claim 21, wherein the C&C server or domain names of attack targets are arrayed on a linear axis while being spaced apart from each other, and
IP addresses of devices sending packets to the domain names are arrayed on circles based on corresponding domain names.

Fig. 1

Fig. 2

340

Blacklist
management
module

300

Data collection
module

310

Parameter extraction
module

320

Data loading
module

Filter module

350

Visualization
generation module

330

Fig. 3

z

$V = \{ r, \theta, z, \lambda \}$

$\lambda$

$\theta$

r

Fig.4

Fig. 5

Fig. 6A

Fig. 6B

Fig. 6C

Fig. 6D